# EUROPÄISCHE PATENTSCHRIFT

(11) **EP 2 923 108 B1**
(45) Veröffentlichungstag und Bekanntmachung des Hinweises auf die Patenterteilung: **30.05.2018**
(21) Anmeldenummer: 13786422.9
(22) Anmeldetag: 02.11.2013
(51) Int. Cl.: F16F 15/26

(54) **MASSENAUSGLEICHSGETRIEBE**
MASS BALANCING GEAR
MÉCANISME D'ÉQUILIBRAGE DES MASSES

(30) Priorität: 24.11.2012 DE 102012023062
(43) Veröffentlichungstag der Anmeldung: 30.09.2015
(73) Patentinhaber: DEUTZ Aktiengesellschaft, 51149 Köln (DE)
(72) Erfinder: KEIMEL, Jan, 53842 Troisdorf (DE); LEMME, Werner, 51503 Rösrath (DE)
(86) Internationale Anmeldenummer: PCT/EP2013/003296
(87) Internationale Veröffentlichungsnummer: WO 2014/079536

(56) Entgegenhaltungen:
- EP-A1- 1 789 228
- EP-A1- 2 354 590
- EP-A1- 2 503 170
- DE-A1- 3 732 223
- DE-A1- 10 240 713
- DE-A1-102005 059 018
- DE-A1-102007 012 665
- DE-A1-102007 037 287
- DE-C- 959 337
- JP-A- H04 316 744
- JP-U- H0 490 750
- US-A- 4 269 550
- US-A- 5 305 656
- US-A1- 2007 012 277

## Beschreibung

Die Erfindung betrifft eine Massenausgleichsgetriebe und ein Verfahren zur Erzeugung eines solchen.

Ein derartiges Montageverfahren für einen Verbund, insbesondere für ein Massenausgleichsgetriebe oder einen Zylinderkopf, mit in einem Gehäuse auf wenigstens einer das Gehäuse durchdringenden Welle drehbar gelagerten Elementen wie beispielsweise Ausgleichsmassen, Nocken, Zahnrädern, insbesondere für ein Kraftfahrzeug, ist beispielsweise aus der EP 1155770 Ein ähnlich gelagertes Massenausgleichsgetriebe mit einer starr ins Gehäuse verbundenen Achse und Ausgleichswelle ist aus der DE102007012665 bekannt. Daran ist nachteilig, dass beim Erzeugen von z. B. Presssitzen Späne erzeugt werden können, die in den Ölkreislauf gelangen können. Aufgabe der vorliegenden Erfindung ist es, die oben genannten Nachteile zu vermeiden.

Die Aufgabe wird gelöst durch ein Massenausgleichsgetriebe (MAG), das wenigstens ein Gehäuse, eine Achse und wenigstens eine Ausgleichswelle umfasst, wobei die Ausgleichswelle wenigstens zwei Gleitlager aufweist, die zwischen Ausgleichswelle und Achse angeordnet sind und die Achse wenigstens eine Spanauffangnut aufweist, wobei die Achse mittels Presssitz in die Gehäuselagerstellen eingepresst ist. Hierbei ist von Vorteil, dass die entstandenen Späne in der Auffangnut gehalten werden und somit keine Schäden anrichten können.

Die Aufgabe wird weiter durch ein Verfahren gemäß Anspruch 10 gelöst.

Weitere wichtige Merkmale und Vorteile ergeben sich aus den Unteransprüchen, aus den Zeichnungen und aus der nachfolgenden Beschreibung eines bevorzugten Ausführungsbeispiels anhand der Zeichnungen. Es zeigen:
- Figur 1: ein Massenausgleichsgetriebe im komplettierten Zustand
- Figur 2: eine Spanauffangnut im Bereich des Lagersitzes einer Achse
- Figur 3: eine Spanauffangnut im Bereich des Lagersitzes einer Achse zwischen Press- und Spielpassung
- Figur 4: einen Schnitt durch ein Massenausgleichsgetriebe
- Figur 5: eine Achse ohne Spanauffangnut und mit Ölkreislauf
- Figur 6: eine Achse mit Spanauffangnut und Ölkreislauf

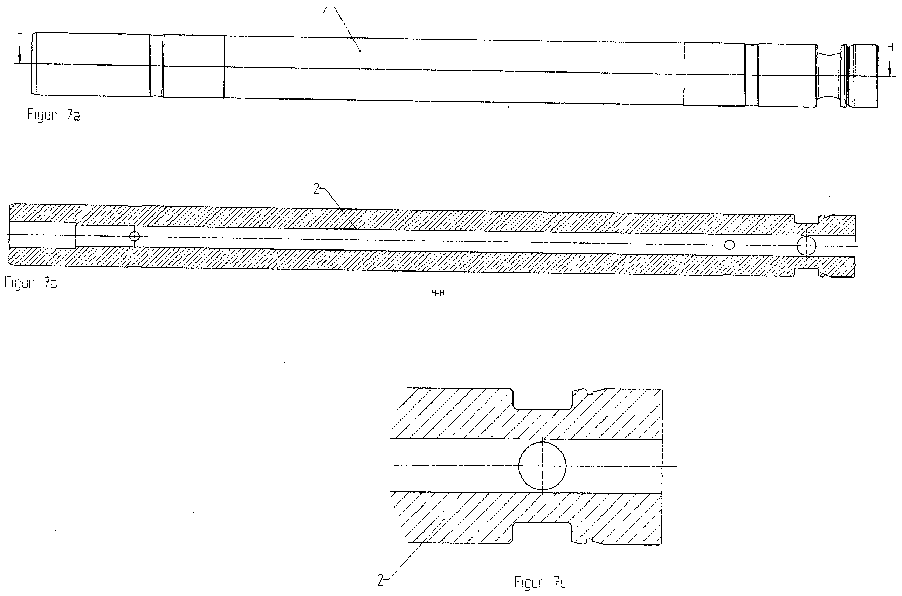

- Figur 7a - c: eine Einzelteildarstellung einer Achse mit Spanauffangnut

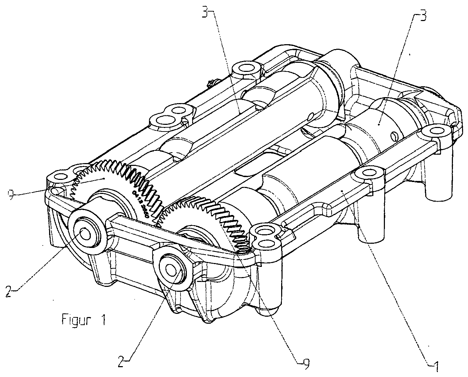

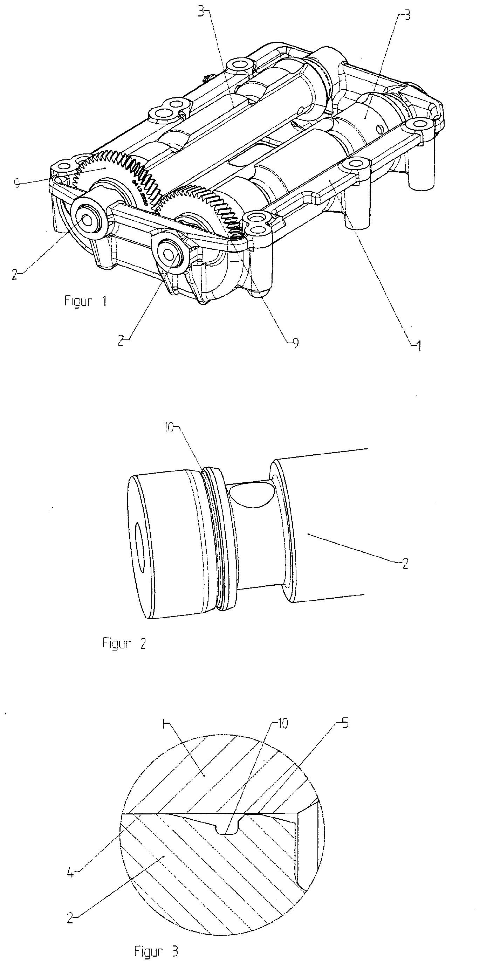

Figur 1 zeigt ein Massenausgleichsgetriebegehäuse 1 im komplettierten Zustand. Es enthält zwei Achsen 2, die im MAG-Gehäuse 1 gelagert sind und auf die je eine Ausgleichswelle 3 aufgesteckt ist. Die Lagerung der Achsen 2 erfolgt mittels eines Presssitzes 4 und einer Spielpassung 5, wie dies insbesondere in Figur 3 dargestellt wird. Die beim Einpressen der Achse 2 in den Lagersitz im MAG-Gehäuse 1 entstehenden Späne 6 werden in der Spanauffangnut 10 der Achse 2 aufgefangen. Das MAG-Gehäuse 1 weist einen Ölkreislauf 7 auf. Auf die zwei Achsen 2, die im MAG-Gehäuse 1 gelagert sind, ist je eine Ausgleichswelle 3 aufgesteckt, zwischen der Welle 3 und der Achse 2 sind je zwei Gleitlagerbuchsen 8 angeordnet. An einer Stirnseite der Ausgleichswelle 3 ist ein Zahnrad 9 angeordnet. Auf den Achsen 2 rotieren die Ausgleichswellen 3 mit Gleitlagerbuchsen 8 und einem Zahnrad 9, wobei jeweils eine Ausgleichswelle 3 auf einer Achse 2 angeordnet ist.

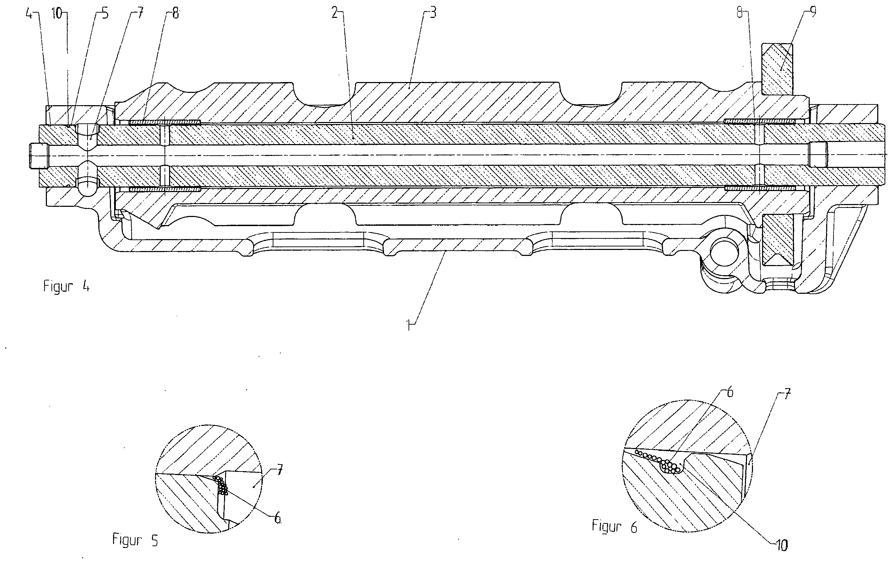

Wenn man nun die Achsen 2 beidseitig fest mit dem MAG-Gehäuse 1 verpresst, dann kommt ein funktionsfähiges MAG zustande. Durch die umlaufenden Massen biegt sich die Achse bei nicht beidseitiger Einspannung unzulässig weit durch und verursacht Kantenträger an den Lagern. Durch das beidseitige Verpressen kann das Problem der Durchbiegung vorteilhaft gelöst werden, was unter anderem in Figur 4 dargestellt wird.

Durch das Einpressen der Achse 2 im Gehäuse 1 verursacht man an den Presssitzstellen 4 minimale Spanabriebe 6. Diese sind bei nicht ölführenden Bauteilen zu vernachlässigen. In diesem besonderen Fall hat die Achse 2 jedoch eine Bohrung, welche Öl transportiert. Durch das Einpressen werden die abgetragenen Späne 6 vorgeschoben und fallen in die umlaufende Nut und die Ölbohrung. Somit verursacht man durch den Montageprozess eine Unreinheit, die von Reinheitsspezifikation abweicht.

Die Achse 2 erhält auf der Seite der ölführenden Bohrung eine Spanauffangnut 10.

Diese Spanauffangnut 10 hält die durch den Einpressvorgang entstandenen Späne fest.

Vor der Ölauffangnut wird die Achse 2 mit einer Spielpassung versehen. Diese ist nur unwesentlich kleiner als die Bohrung im MAG-Gehäuse 1.

In einer besonders bevorzugten Ausführungsform werden die nachfolgenden Maße verwendet:
Bohrung MAG-Gehäuse : Ø 26,096 mm - 0,015 mm
Ø Achse Spielpassung: Ø 26,000 km - 0,013 mm

Höchstmaß Bohrung Gehäuse: 26,096 mm
Ø Achse Spielpassung min. : 25,987 mm

26,096 mm - 25,987 mm = 0,109 mm

Max. Spaltmaß: 0,109 mm / 2 = 0,0545 mm

Somit ist in diesem Fall gewährleistet, dass alle Späne mit größeren Abmessungen als 0,0545 mm in der Spanauffangnut gehalten werden.

Die Spielpassung kann weiter reduziert werden und somit kann ebenfalls das Spaltmaß weiter reduziert werden, um noch kleinere Späne in der Auffangnut zu halten.

Bild 2 zeigt die Spanauffangnut mit deren Geometrie.

Die Auffangnut hält die entstandenen Späne des Einpressvorganges in der Auffangnut und gewährleistet somit die Reinheitsvorschrift für das komplettierte MAG.

Figur 3 zeigt einen Schnitt durch die Lagerung der Achse 2 im Massenausgleichsgetriebegehäuse 1 und verdeutlicht den geringen Durchmesserunterschied zwischen a) Spielpassung 5 vor der Spanauffangnut 10 gegenüber b) des Presssitzes 4 nach der Auffangnut.

In Figur 4 wird ein Massenausgleichsgetriebegehäuse 1 gezeigt, in dem auf einer Achse 2 eine Ausgleichswelle 3 angeordnet ist. Die Achse 2 ist mittels Presssitz 4 in die Gehäuselagerstellen eingepresst. Die Achse 2 umfasst eine Spanauffangnut 10, die zwischen dem Presssitz 4 und der Spielpassung 5 im Wesentlichen im Bereich der Stirnseite der Achse 2 angeordnet ist. Die Spanauffangnut 10 sammelt die beim Einpressen der Achse ins MAG-Gehäuselager entstehenden Späne auf und schließt sie dort auf ewig ein, um einschlägigen Reinheitsspezifikationen zu genügen. Somit können die eingeschlossenen Späne 6 nicht in den Ölkreislauf 7 des MAG gelangen. Die Ausgleichswelle 3 ist mittels Gleitlagerbuchse 8, die konzentrisch um Achse 2 angeordnet ist, auf der Achse 2 gelagert. An der einen Stirnseite der Ausgleichswelle 3 ist ein Zahnrad 9 auf die Ausgleichswelle 3 angeordnet.

### Bezugszeichen

- 1: Massenausgleichsgetriebegehäuse
- 2: Achse
- 3: Ausgleichswelle
- 4: Presssitz
- 5: Spielpassung
- 6: Späne
- 7: Ölkreislauf
- 8: Gleitlagerbuchse
- 9: Zahnrad
- 10: Spanauffangnut

## Patentansprüche

1. Massenausgleichsgetriebe, umfassend wenigstens ein Gehäuse (1), eine Achse (2) und wenigstens eine Ausgleichswelle (3), wobei die Ausgleichswelle wenigstens zwei Gleitlager (8) aufweist, die zwischen Ausgleichswelle und Achse angeordnet sind und die Achse wenigstens eine Spanauffangnut (10) aufweist, wobei die Achse mittels Presssitz in die Gehäuselagerstellen eingepresst ist.

2. Massenausgleichsgetriebe nach Anspruch 1,
**dadurch gekennzeichnet, dass** es wenigstens zwei Achsen und wenigstens zwei Ausgleichswellen aufweist.

3. Massenausgleichsgetriebe nach einem oder mehreren der vorgenannten Ansprüche,
**dadurch gekennzeichnet, dass** die Achse wenigstens zwei Spanauffangnuten aufweist.

4. Massenausgleichsgetriebe nach einem oder mehreren der vorgenannten Ansprüche,
**dadurch gekennzeichnet, dass** die Achse wenigstens einen Presssitzbereich aufweist.

5. Massenausgleichsgetriebe nach einem oder mehreren der vorgenannten Ansprüche,
**dadurch gekennzeichnet, dass** die Achse wenigstens eine Spielpassungsbereich aufweist.

6. Massenausgleichsgetriebe nach einem oder mehreren der vorgenannten Ansprüche,
**dadurch gekennzeichnet, dass** die Achse eine Spanauffangnut aufweist, die insbesondere zwischen dem Presssitzbereich und dem Spielpassungsbereich angeordnet ist.

7. Massenausgleichsgetriebe nach einem oder mehreren der vorgenannten Ansprüche,
**dadurch gekennzeichnet, dass** die Spanauffangnut als umlaufende Nut ausgeführt ist.

8. Massenausgleichsgetriebe nach einem oder mehreren der vorgenannten Ansprüche,
**dadurch gekennzeichnet, dass** die Achse wenigstens eine Bohrung zum Transport von Öl aufweist.

9. Massenausgleichsgetriebe nach einem oder mehreren der vorgenannten Ansprüche,
**dadurch gekennzeichnet, dass** die Ausgleichswelle wenigstens ein Zahnrad aufweist.

10. Verfahren zur Erzeugung eines Massenausgleichsgetriebes mit beidseitig verpresster Achse,
**dadurch gekennzeichnet, dass** eine Vorrichtung nach einem oder mehreren der vorgenannten Ansprüche zum Einsatz kommt.

## Claims

1. Mass-balancing gear mechanism, comprising at least one housing (1), an axle (2) and at least one balancing shaft (3), the balancing shaft having at least two plain bearings (8) which are arranged between the balancing shaft and the axle, and the axle having at least one abraded material collecting groove (10), the axle being pressed into the housing bearing points by means of a press fit.

2. Mass-balancing gear mechanism according to Claim 1, **characterized in that** it has at least two axles and at least two balancing shafts.

3. Mass-balancing gear mechanism according to either or both of the preceding claims, **characterized in that** the axle has at least two abraded material collecting grooves.

4. Mass-balancing gear mechanism according to one or more of the preceding claims, **characterized in that** the axle has at least one press fit region.

5. Mass-balancing gear mechanism according to one or more of the preceding claims, **characterized in that** the axle has at least one clearance fit region.

6. Mass-balancing gear mechanism according to one or more of the preceding claims, **characterized in that** the axle has an abraded material collecting groove which is arranged, in particular, between the press fit region and the clearance fit region.

7. Mass-balancing gear mechanism according to one or more of the preceding claims, **characterized in that** the abraded material collecting groove is configured as a circumferential groove.

8. Mass-balancing gear mechanism according to one or more of the preceding claims, **characterized in that** the axle has at least one bore for the transport of oil.

9. Mass-balancing gear mechanism according to one or more of the preceding claims, **characterized in that** the balancing shaft has at least one gearwheel.

10. Method for producing a mass-balancing gear mechanism with an axle which is pressed in on both sides, **characterized in that** an apparatus according to one or more of the preceding claims is used.

## Revendications

1. Mécanisme d'équilibrage de masses, comprenant au moins un boîtier (1), un axe (2) et au moins un arbre d'équilibrage (3), l'arbre d'équilibrage présentant au moins deux paliers lisses (8) qui sont disposés entre l'arbre d'équilibrage et l'axe et l'axe présentant au moins une rainure de réception de copeaux (10), l'axe étant pressé au moyen d'un ajustement serré dans les points de palier du boîtier.

2. Mécanisme d'équilibrage de masses selon la revendication 1, **caractérisé en ce qu'**il présente au moins deux axes et au moins deux arbres d'équilibrage.

3. Mécanisme d'équilibrage de masses selon l'une quelconque ou plusieurs des revendications précédentes,
**caractérisé en ce que** l'axe présente au moins deux rainures de réception de copeaux.

4. Mécanisme d'équilibrage de masses selon l'une quelconque ou plusieurs des revendications précédentes, **caractérisé en ce que** l'axe présente au moins une région d'ajustement serré.

5. Mécanisme d'équilibrage de masses selon l'une quelconque ou plusieurs des revendications précédentes,
**caractérisé en ce que** l'axe présente au moins une région d'ajustement avec jeu.

6. Mécanisme d'équilibrage de masses selon l'une quelconque ou plusieurs des revendications précédentes,
**caractérisé en ce que** l'axe présente une rainure de réception de copeaux qui est disposée notamment entre la région d'ajustement serré et la région d'ajustement avec jeu.

7. Mécanisme d'équilibrage de masses selon l'une quelconque ou plusieurs des revendications précédentes,
**caractérisé en ce que** la rainure de réception de copeaux est réalisée sous forme de rainure périphérique.

8. Mécanisme d'équilibrage de masses selon l'une quelconque ou plusieurs des revendications précédentes, **caractérisé en ce que** l'axe présente au moins un alésage pour le transport d'huile.

9. Mécanisme d'équilibrage de masses selon l'une quelconque ou plusieurs des revendications précédentes, **caractérisé en ce que** l'arbre d'équilibrage présente au moins une roue dentée.

10. Procédé de fabrication d'un mécanisme d'équilibrage de masses comprenant un axe pressé des deux côtés, **caractérisé en ce qu'**un dispositif selon l'une quelconque ou plusieurs des revendications précédentes est utilisé.
